# EUROPÄISCHE PATENTSCHRIFT

(11) **EP 2 480 422 B1**
(45) Veröffentlichungstag und Bekanntmachung des Hinweises auf die Patenterteilung: **25.04.2018**
(21) Anmeldenummer: 10752776.4
(22) Anmeldetag: 06.09.2010
(51) Int. Cl.: B60C 11/16

(54) **GLEITSCHUTZSTIFT**
SPIKE
CRAMPON

(30) Priorität: 23.09.2009 DE 102009042720
(43) Veröffentlichungstag der Anmeldung: 01.08.2012
(73) Patentinhaber: SITEK-Spikes GmbH & Co. KG, 78733 Aichhalden (DE); The Goodyear Tire & Rubber Company, Akron, Ohio 44316-0000 (US)
(72) Erfinder: PONS, Fréderic, Michel, Jean, F-57100 Thionville (FR); MORIN, Sébastien, F- 34110 Montpellier (FR); FRAIPONT, Xavier, Sébastien, Benoît, F-4560 Ochain Clavier (FR); ROTH, Stefan, 78733 Aichhalden (DE)
(74) Vertreter: Herrmann, Jochen
(86) Internationale Anmeldenummer: PCT/EP2010/063007
(87) Internationale Veröffentlichungsnummer: WO 2011/036050

(56) Entgegenhaltungen:
- EP-A1- 1 661 734
- WO-A1-2005/049341
- DE-A1- 1 903 668
- DE-U- 7 522 509
- JP-A- 60 060 012
- JP-A- 60 076 405
- SE-C2- 523 713
- US-A- 3 464 476
- US-A- 3 810 298

## Beschreibung

Die Erfindung betrifft einen Gleitschutzstift für einen Reifen mit einem Tragteil und einem daran gehaltenen Einsatz, wobei das Tragteil einen Flanschabschnitt aufweist, an den ein Halteabschnitt angeschlossen ist, in den eine Aufnahme eingeformt ist, wobei der Einsatz in die Aufnahme eingesetzt ist und mit einem Kopf aus der Aufnahme herausragt.

Ein derartiger Gleitschutzstift ist aus der DE 19 03 668 bekannt. Dabei ist ein Tragteil verwendet, das als Verankerungsfuß einen Flanschabschnitt aufweist. An den Verankerungsfuß ist ein zylindrischer Halteabschnitt angeformt. In dem Halteabschnitt ist sacklochartig eine Aufnahme eingetieft, in der ein Einsatz aus Hartwerkstoff, vorzugsweise ein Hartmetallstift, gehalten ist. Der Einsatz ragt mit einem Kopf aus der Aufnahme heraus, wobei der Kopf im Querschnitt quadratisch, rund oder dreieckförmig sein kann. Der Kopf bildet das funktionale Element, das im Winterbetrieb in die auf der Fahrbahn aufliegende Schnee- oder Eisschicht eindringt, um eine verbesserte Griffigkeit zu erreichen. In der Praxis haben sich Gleitschutzstifte mit Einsätzen durchgesetzt, die einen im Querschnitt runden Kopf aufweisen. Die Einsätze mit quadratischem oder dreieckigem Querschnitt haben eine gute Griffigkeit, da die Kantenabschnitte des Kopfes ein gutes Eindringen in die Schnee- oder Eisdecke unterstützen. Dieser Effekt wird vornehmlich dann erreicht, wenn der Kopfquerschnitt in der Lage seiner Kanten exakt zum Reifen ausgerichtet ist. Diese Ausrichtung lässt sich bei der Montage nur schwer bewerkstelligen und im Betriebseinsatz verdrehen sich die Gleitschutzstifte gegenüber dem Reifen. Dann ist aber der Vorteil der verbesserten Griffigkeit nicht mehr gegeben. Es hat sich weiterhin gezeigt, dass die quadratischen beziehungsweise dreieckigen Querschnitte bei bestimmten Straßenverhältnissen ein ungünstiges Verschleißverhalten aufweisen und sich dann übermäßig schnell abnutzen.
Aus der SE 523 713 C2 ist ein Gleitschutzstift bekannt, der eine ähnliche Bauart wie der gemäß der DE 19 03 668 aufweist. Als Einsatz wird dabei ein Hartmetallstift verwendet, der einen fünfkantförmigen Querschnitt aufweist. Auch hier besteht die Problematik, dass eine exakte Gleitschutzausrichtung erforderlich ist. Um diesen Nachteil zu umgehen, schlägt die SE 523 713 C2 vor, die Kanten des Kopfabschnittes konkav zu wölben, um einen verbesserten Kanteneingriff unabhängig von der Raumorientierung zu erreichen. Weiterhin werden siebenkantige Querschnittsformen vorgeschlagen, die dann aber wieder dem runden Querschnitt angenähert sind und gegenüber diesem keine wesentlich verbesserte Griffigkeit bieten, so dass der für die Herstellung erforderliche Mehraufwand nicht gerechtfertigt ist.
Ein weiterer Gleitschutzstiftist aus der WO 2005/049341 A1 bekannt. Dabei weist der Gleitschutzstift einen Flanschabschnitt auf, an den ein Tragteil angeschlossen ist. Der Tragteil besitzt an seinem freien Ende ein verdicktes Endstück. In dem Tragteil kann ein Einsatz in Form eines Stiftes mit sechskantförmigen Querschnitt aufgenommen werden. Die US 3,464,476 offenbart einen Gleitschutzstift mit einer Hülse, in die ein Einsatz, bestehend aus einem harten Metallwerkstoff eingepresst ist. Die Hülse ist von einem Polymermantel umgeben.

Es ist Aufgabe der Erfindung, einen Gleitschutzstift der eingangs erwähnten Art zur Verfügung zu stellen, der sich durch eine verbesserte Griffigkeit auch dann auszeichnet, wenn er lageunabhängig montiert ist.

Diese Aufgabe wird mit den Ansprüchen 1 und 2 gelöst.

Es hat sich gezeigt, dass bei dieser Querschnittsform unabhängig von der Anordnung des Kopfes und dessen Orientierung in Bezug auf die Fahrtrichtung stets in etwa die gleichen Griffigkeitswerte erreicht werden. Damit ergibt sich ein deutlicher Montagevorteil. Es hat sich weiterhin überraschender Weise gezeigt, dass die sechskantförmige Querschnittgeometrie gegenüber den bekannten Gleitschutzstiften eine verbesserte Griffigkeit aufweist, insbesondere ist die Seitenstabilität bei Kurvenfahrten deutlich verbessert.

Erfindungsgemäß ist es vorgesehen, dass der sechskantförmige Querschnitt des Kopfes von zueinander paarweise parallelen Flächen gebildet wird, wobei die parallelen Flächen zueinander ein Abstandsmaß aufweisen, das im Bereich zwischen 1,8 mm und 2,8 mm, vorzugsweise zwischen 2,2 mm und 2,4 mm, beispielsweise 2,3 mm liegt. Diese Querschnittsgestaltung ermöglicht ein aggressives Eindringen in die Schnee-/Eisdecke beim Abrollvorgang. Gleichzeitig wird aber auch, senkrecht zur Querschnittsebene gesehen, eine für die Seitenstabilität besonders geeignet dimensionierte Projektionsfläche geschaffen.

Für gleichmäßige Griffigkeitswerte ist es von Vorteil, dass der sechskantförmige Querschnitt symmetrisch ausgebildet ist und alle Flächen in der Querschnittsebene die gleiche Erstreckung aufweisen.

Wenn der Gleitschutzstift derart ist, dass die Ecken des sechskantförmigen Querschnitts von gerundeten Übergangsabschnitten gebildet sind, dann ist zum einen eine verschleißoptimierte Auslegung der Kanten erreicht. Zum anderen wird beim Abrollen des Reifens ein sukzessiver Kanteneingriff begünstigt.

Eine besonders bevorzugte Erfindungsvariante ist derart, dass an den Kopf des Einsatzes ein Schaft angeformt ist, und dass der sechskantförmige Querschnitt des Kopfes in einem Überleitungsbereich des Schaftes kontinuierlich ausläuft. Über den

Überleitungsbereich können die in den Kopf eingebrachten Beanspruchungen kontinuierlich aufgenommen werden, so dass keine unzulässigen Spannungsspitzen entstehen. Denkbar ist es, dass der Schaft einen konischen Abschnitt aufweist oder konisch ausgestaltet ist. Der Schaft kann dann mit seinem Konusbereich in einer Konusaufnahme des Tragteils kraftschlüssig aufgenommen werden. Dabei sollte der Konuswinkel so dimensioniert sein, dass Selbsthemmung vorliegt.

Wenn vorgesehen ist, dass der Kopf des Einsatzes von einem kalottenförmigen, konvex gewölbten Kappenabschnitt abgeschlossen ist, dann wird das Eindringverhalten des Gleitschutzstiftes verbessert und beim Abrollen des Reifens dessen Lagestabilisierung erreicht. Darüber hinaus ergibt sich dadurch ein verbessertes Verschleißverhalten, da der Kanteneingriff des Kopfes kontinuierlich erfolgt.

Der erfindungsgemäße Gleitschutzstift zeichnet sich durch eine besondere Griffigkeit aus. Um dabei die im Betrieb auftretenden Kräfte sicher ableiten zu können, ohne dass der Einsatz sich löst, kann es vorgesehen sein, dass der Einsatz im Bereich zwischen 1,0 mm und 1,4 mm, vorzugsweise 1,1 mm bis 1,3 mm, besonders bevorzugt 1,2 mm, aus der Aufnahme herausragt und in Achsrichtung des Einsatzes über eine Haltelänge von mindestens 4,5 mm in der Aufnahme fixiert ist. Eine sichere Verankerung und Kraftableitung in den Reifen wird dadurch bewirkt, dass der Flanschabschnitt einen ersten Durchmesser bildet, dass der Halteabschnitt einen Abschnitt aufweist, der einen zweiten Durchmesser aufweist, und dass das Durchmesserverhältnis des ersten Durchmessers zu dem zweiten Durchmesser im Bereich zwischen 1,3 und 1,8, vorzugsweise 1,4 bis 1,6, vorzugsweise 1,52 gewählt ist.

Eine sichere Verankerung des Tragteils lässt sich insbesondere dann erreichen, wenn der Flanschabschnitt einen ersten Durchmesser ≥ 7,5 mm aufweist.

Eine stabile Bauform, die zugleich gewichtsoptimiert ist, ergibt sich dadurch, dass das Tragteil an seinem dem Flanschabschnitt abgewandten Ende ein

Endstück aufweist, das einen kreisrunden Querschnitt bildet, dass der kreisrunde Querschnitt des Endstücks einen dritten Durchmesser aufweist, und dass das Durchmesserverhältnis des ersten Durchmessers des Flanschabschnitts zu dem dritten Durchmesser im Bereich zwischen 1,1 und 1,5, vorzugsweise 1,2 bis 1,4, beispielsweise 1,3 gewählt ist, und/oder dass das Durchmesserverhältnis des zweiten Durchmessers des Halteabschnittes zu dem dritten Durchmesser des Endabschnittes im Bereich zwischen 0,75 und 0,95, vorzugsweise 0,83 bis 0,89, beispielsweise 0,857 gewählt ist.

Der Einsatz ist insbesondere dann ausreichend sicher im Tragteil verankert, wenn vorgesehen ist, dass das Tragteil eine Gesamtlängserstreckung in Achsrichtung im Bereich zwischen 8,0 mm und 12,0 mm, vorzugsweise 9,7 bis 10,1 mm aufweist, und dass der Einsatz eine Länge in Achsrichtung des Tragteils aufweist, die im Bereich zwischen 4 mm und 7,5 mm, beispielsweise 6,3 mm gewählt ist.

Um bei hohen Belastungen eine Deformation oder einen Bruch des Flanschabschnittes sicher zu verhindern, kann ein erfindungsgemäßer Gleitschutzstift dergestalt sein, dass der Flanschabschnitt eine Höhe in Achsrichtung des Tragteils im Bereich zwischen 1,0 mm und 2,2, vorzugsweise 1,5 mm bis 1,7 mm mm aufweist.

Ein weiterer erfindungsgemäßer Gleitschutzstift kann derart sein, dass das Verhältnis der Gesamtlängserstreckung des Tragteils zu dem maximalen Durchmesser des Flanschabschnittes im Bereich zwischen 1,1 und 1,3 gewählt ist. Bei dieser Bauform wird die über den Einsatz eingebrachte Biegebeanspruchung sicher in den Reifen abgeleitet.

Eine bevorzugte Erfindungsvariante ist dergestalt, dass das Tragteil und der Einsatz zusammen eine Masse ≤ 1,1 g aufweisen.

Die Erfindung wird im Folgenden anhand eines in den Zeichnungen dargestellten Ausführungsbeispieles näher erläutert.

Es zeigen:
- Fig. 1: in perspektivischer Darstellung einen Gleitschutzstift,
- Fig. 2: den Gleitschutzstift gemäß Fig. 1 in Seitenansicht und teilweise im Schnitt und
- Fig. 3: den Gleitschutzstift gemäß Fig. 1 und 2 in Draufsicht.

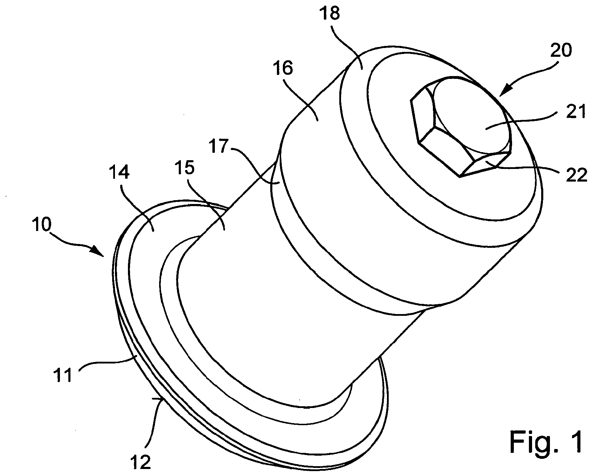

Fig. 1 zeigt einen Gleitschutzstift mit einem Tragteil 10, das als Metallgussteil, insbesondere Aluminiumgussteil, gefertigt ist.

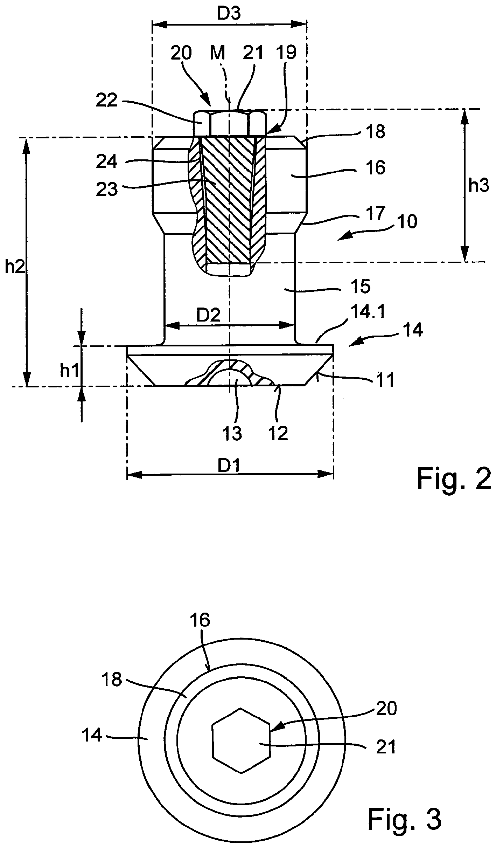

Wie die Fig. 2 deutlicher zeigt, weist das Tragteil 10 einen als Verankerungsfuß ausgebildeten Flanschabschnitt 14 auf, der eine untere, ebene Stützfläche 12 bildet, in die eine Einmuldung 13 aus Gründen der Gewichtsreduzierung eingetieft ist.

An die Stützfläche 12 schließt sich im Winkel eine ringförmige umlaufende Schrägfläche 11 an. Die Schrägfläche 11 geht über einen Rundungsabschnitt in eine Schulter 14.1 über, die senkrecht zur Mittellängsachse M des Gleitschutzstiftes orientiert ist.

Wie die Fig. 3 erkennen lässt, verläuft die Schulter 14.1 ringförmig um die Mittellängsachse M. Der Flanschabschnitt 14 selbst ist stumpfkeglig ausgebildet und besitzt einen maximalen ersten Durchmesser D1 (beispielsweise ≥ 7,5 mm, vorliegend 8,2 mm). Im Bereich der Schulter 14.1 ist ein Halteabschnitt 15 an den Flanschabschnitt 14 angeformt. Der Halteabschnitt 15 weist einen zylindrischen Mittenbereich mit einem zweiten Durchmesser D2 (beispielsweise im Bereich zwischen 5,0 und 5,8 mm, vorzugsweise 5,2 und 5,6 mm, vorliegend 5,4 mm) auf. Am freien Ende des Tragteils 10 bildet der Halteabschnitt 15 ein verdicktes Endstück 16 mit einem Durchmesser D3, wobei der Mittenbereich über einen zur Mittellängsachse M geneigt

verlaufenden Stützabschnitt 17 in das Endstück 16 übergeleitet ist. Das Endstück 16 ist mit einer umlaufenden Fase 18 abgeschlossen. Der Durchmesser D3 beträgt zwischen 5,9 mm und 6,7 mm, vorzugsweise 6,1 mm und 6,5 mm, besonders bevorzugt 6,3 mm.

In das Tragteil 10 ist eine Aufnahme 19 eingebracht, in der ein Einsatz 20 befestigt ist. Der Einsatz 20 ist als Hartmetallstift ausgebildet. Er besitzt einen Schaft 23, an den ein Kopf 22 angeformt ist. Der Kopf 22 weist einen sechskantförmigen Querschnitt auf und ist mit einem konvex gewölbten Kappenabschnitt 21 abgeschlossen.

Die Querschnittsform des Kopfes 22 ist in den Schaft 23 übergeleitet, wobei ein Überleitungsbereich 24 gebildet ist, in dem die Kanten des Kopfes 22 kontinuierlich im Schaft 23 auslaufen. Das freie, dem Kopf 22 abgekehrte Schaftende ist im Querschnitt dann kreisrund gestaltet. Die Aufnahme 19 ist so dimensioniert, dass der Einsatz 20 eingepresst werden kann. Dabei fließt verdrängtes Material des Tragteils 10 in die freien Querschnittsbereiche zwischen der Aufnahme 19 und dem Schaft 23. Auf diese Weise wird eine sichere Verankerung des Einsatzes 20 gewährleistet.

## Patentansprüche

1. Gleitschutzstift für einen Reifen mit einem Tragteil (10) und einem daran gehaltenen Einsatz (20), wobei das Tragteil (10) einen Flanschabschnitt (14) aufweist, an den ein Halteabschnitt (15) angeschlossen ist, in den eine Aufnahme (19) eingeformt ist, wobei der Einsatz (20) in die Aufnahme (19) eingesetzt ist und mit einem Kopf (22) aus der Aufnahme (19) herausragt, wobei der Kopf (22) des Einsatzes (20) zumindest bereichsweise einen sechskantenförmigen Querschnitt aufweist,
wobei der Halteabschnitt (15) einen zylindrischen Mittenbereich mit einem zweiten Durchmesser (D2) besitzt,
und wobei der Halteabschnitt (15) am freien Ende des Tragteils ein verdicktes Endstück (16) mit kreisrundem Querschnitt mit einem Durchmesser (D3) bildet,
**dadurch gekennzeichnet,**
**dass** der sechskantförmige Querschnitt des Kopfes (22) von zueinander paarweise parallelen Flächen gebildet wird, wobei die parallelen Flächen zueinander ein Abstandsmaß aufweisen, das im Bereich zwischen 1,8 mm und 2,8 mm liegt,
das Tragteil (10) an seinem dem Flanschabschnitt (14) abgewandten Ende
das Endstück (16) aufweist, das einen kreisrunden Querschnitt bildet und wobei das Durchmesserverhältnis des zweiten Durchmessers (D2) des Halteabschnittes (15) zu dem dritten Durchmesser (D3) (D2 : D3) des Endstückes (16) im Bereich zwischen 0,75 und 0,95 gewählt ist.

2. Gleitschutzstift für einen Reifen mit einem Tragteil (10) und einem daran gehaltenen Einsatz (20), wobei das Tragteil (10) einen Flanschabschnitt (14) aufweist, an den ein Halteabschnitt (15) angeschlossen ist, in den eine Aufnahme (19) eingeformt ist, wobei der Einsatz (20) in die Aufnahme (19) eingesetzt ist und mit einem Kopf (22) aus der Aufnahme (19) herausragt, wobei der Kopf (22) des Einsatzes (20) zumindest bereichsweise einen sechskantenförmigen Querschnitt aufweist,
**dadurch gekennzeichnet,**
**dass** die Ecken des sechskantförmigen Querschnitts von gerundeten Übergangsabschnitten gebildet sind,
und **dass** der Kopf (22) des Einsatzes (20) von einem kalottenförmigen, konvex gewölbten Kappenabschnitt abgeschlossen ist.

3. Gleitschutzstift nach Anspruch 1 oder 2,
**dadurch gekennzeichnet,**
**dass** der sechskantförmige Querschnitt symmetrisch ausgebildet ist und alle Flächen in der Querschnittsebene die gleiche Erstreckung aufweisen.

4. Gleitschutzstift nach einem der Ansprüche 1 bis 3,
**dadurch gekennzeichnet,**
**dass** an den Kopf (22) des Einsatzes (20) ein Schaft (23) angeformt ist, und dass der sechskantförmige Querschnitt des Kopfes (22) in einem Überleitungsbereich (24) des Schaftes (23) kontinuierlich ausläuft.

5. Gleitschutzstift nach Anspruch 1,
**dadurch gekennzeichnet,**
**dass** der Kopf (22) des Einsatzes (20) von einem kalottenförmigen, konvex gewölbten Kappenabschnitt (21) abgeschlossen ist.

6. Gleitschutzstift nach einem der Ansprüche 1 bis 5,
**dadurch gekennzeichnet,**
**dass** der Einsatz (20) im Bereich zwischen 1,0 mm und 1,4 mm aus der Aufnahme (19) herausragt und in Achsrichtung des Einsatzes (20) über eine Haltelänge von mindestens 4,5 mm in der Aufnahme (19) fixiert ist.

7. Gleitschutzstift nach einem der Ansprüche 1 bis 6,
**dadurch gekennzeichnet,**
**dass** der Flanschabschnitt (14) einen ersten maximalen Durchmesser (D1) bildet,
**dass** der Halteabschnitt (15) einen Abschnitt aufweist, der einen zweiten Durchmesser (D2) aufweist, und
**dass** das Durchmesserverhältnis des ersten Durchmessers (D1) zu dem zweiten Durchmesser (D2) im Bereich zwischen 1,2 und 1,7 gewählt ist.

8. Gleitschutzstift nach einem der Ansprüche 1 bis 7,
**dadurch gekennzeichnet,**
**dass** das Tragteil (10) an seinem dem Flanschabschnitt (14) abgewandten Ende ein Endstück (16) aufweist, das einen kreisrunden Querschnitt bildet,
**dass** der kreisrunde Querschnitt des Endstücks (16) einen dritten Durchmesser (D3) aufweist, und
**dass** das Durchmesserverhältnis des ersten Durchmessers (D1) des Flanschabschnitts (14) zu dem dritten Durchmesser (D3) (D1 : D3) im Bereich zwischen 1,1 und 1,5 gewählt ist.

9. Gleitschutzstift nach einem der Ansprüche 1 bis 8,
**dadurch gekennzeichnet,**
**dass** das Tragteil (10) eine Gesamtlängserstreckung (h1) in Achsrichtung im Bereich zwischen 8,0 mm und 12,0 mm aufweist, und
**dass** der Einsatz (20) eine Länge (h3) in Achsrichtung des Tragteils (10) aufweist, die im Bereich zwischen 4 mm und 7,5 mm gewählt ist.

10. Gleitschutzstift nach einem der Ansprüche 1 bis 9,
**dadurch gekennzeichnet,**
**dass** der Flanschabschnitt (14) eine Höhe (h1) in Achsrichtung des Tragteils (10) im Bereich zwischen 1,0 mm und 2,2 mm aufweist.

11. Gleitschutzstift nach einem der Ansprüche 7 bis 10,
**dadurch gekennzeichnet,**
**dass** das Verhältnis der Gesamtlängserstreckung (h1) des Tragteils (10) zu dem maximalen Durchmesser (D1) (h1 : D1) des Flanschabschnittes (14) im Bereich zwischen 1,1 und 1,3 gewählt ist.

12. Gleitschutzstift nach einem der Ansprüche 1 bis 11,
**dadurch gekennzeichnet,**
**dass** das Tragteil (10) und der Einsatz (20) zusammen eine Masse ≤ 1,1 g aufweisen.

13. Reifen mit einem Gleitschutzstift, wobei der Gleitschutzstift in einer Aufnahme des Reifens verankert ist,
**gekennzeichnet durch** einen Gleitschutzstift gemäß einem der Ansprüche 1 bis 12.

## Claims

1. An anti-skid stud for a tyre with a carrier part (10) and an insert held on it (20),
wherein the carrier part (10) has a flange section (14), to which a holding section (15) is connected, into which a recess (19) is moulded, wherein the insert (20) is inserted into the recess (19) and has a head (22) which projects from the recess (19), wherein the head (22) of the insert (20) has a hexagonal cross section at least in regions,
wherein the holding section (15) has a cylindrical middle area with a second diameter (D2),
and wherein the holding section (15) forms, at the free end of the carrier part, a thickened end piece (16) with a circular cross section with a diameter (D3),
**characterised in that**
the hexagonal cross section of the head (22) is formed by pairs of surfaces that are parallel to each other, wherein the parallel surfaces are at a distance from each other that is in the range of 1.8 mm to 2.8 mm,
the carrier part (10) at its end opposite to the flange section (14) has the end piece (16) that forms a circular cross section and
wherein the ratio of the second diameter (D2) of the holding section (15) to the third diameter (D3) (D2: D3) of the end piece (16) is chosen to be in the range of 0.75 to 0.95.

2. An anti-skid stud for a tyre with a carrier part (10) and an insert (20) held on it,
wherein the carrier part (10) has a flange section (14), to which a holding section (15) is connected, into which a recess (19) is moulded, wherein the insert (20) is inserted into the recess (19) and has a head (22) which projects from the recess (19), wherein the head (22) of the insert (20) has a hexagonal cross section at least in regions,
**characterised in that**
the angles of the hexagonal cross section are formed by rounded transitional sections,
and that the head (22) of the insert (20) is completed by a dome-shaped, convex curved cap section.

3. An anti-skid stud according to Claim 1 or 2,
**characterised in that**
the hexagonal cross section is designed to be symmetrical and all surfaces in the cross-sectional plane extend equally.

4. An anti-skid stud according to any one of claims 1 to 3,
**characterised in that**
a shaft (23) is moulded onto the head (22) of the insert (20), and that the hexagonal cross section of the head (22) tapers off continually in a transfer section (24) of the shaft (23).

5. An anti-skid stud according to Claim 1,
**characterised in that**
the head (22) of the insert (20) is completed by a dome-shaped, convex cap section (21).

6. An anti-skid stud according to any one of claims 1 to 5,
**characterised in that**
the insert (20) projects from the recess (19) in a range of 1.0 mm to 1.4 mm and is fixed in the recess (19) in the axial direction of the insert (20) along a holding length of at least 4.5 mm.

7. An anti-skid stud according to any one of claims 1 to 6,
**characterised in that**
the flange section (14) forms a first maximum diameter (D1),
that the holding section (15) has a section which has a second diameter (D2), and
that the ratio of the first diameter (D1) to the second diameter (D2) is chosen to be in the range of 1.2 to 1.7.

8. An anti-skid stud according to any one of claims 1 to 7,
**characterised in that**
the carrier part (10) has an end piece (16) that forms a circular cross section at its end facing away from the flange section (14), that the circular cross section of the end piece (16) has a third diameter (D3), and
that the ratio of the first diameter (D1) of the flange section (14) to the third diameter (D3) (D1: (D3) is chosen to be in the range of 1.1 to 1.5.

9. An anti-skid stud according to any one of claims 1 to 8,
**characterised in that**
the carrier part (10) has a total longitudinal extension (h1) in the axial direction in the range of 8.0 mm to 12.0 mm, and
that the insert (20) has a length (h3) in the axial direction of the carrier part (10) which is chosen to be in the range of 4 mm to 7.5 mm.

10. An anti-skid stud according to any one of claims 1 to 9,
**characterised in that**
the flange section (14) has a height (h1) in the axial direction of the carrier part (10) in the range of 1.0 mm to 2.2 mm.

11. An anti-skid stud according to any one of claims 7 to 10,
**characterised in that**
the ratio of the total longitudinal extension (h1) of the carrier part (10) to the maximum diameter (D1) (h1: (D1) of the flange section (14) is chosen to be in the range of 1.1 to 1.3.

12. An anti-skid stud according to any one of claims 1 to 11,
**characterised in that**
the carrier part (10) and the insert (20) together make up a mass of ≤ 1.1 g.

13. A tyre with an anti-skid stud, wherein the anti-skid stud is anchored in a recess of the tyre,
**characterised in** an anti-skid stud according to any one of claims 1 to 12.

## Revendications

1. Crampon pour un pneumatique comprenant une partie support (10) et un insert (20) maintenu sur celle-ci, la partie support (10) présentant une section de flanc (14) à laquelle une section de retenue (15) est raccordée, dans laquelle un logement (19) est formé, l'insert (20) étant introduit dans le logement (19) et faisant saillie avec une tête (22) depuis le logement (19), la tête (22) de l'insert (20) présentant au moins par sections une section transversale de forme hexagonale,
la section de retenue (15) possédant une zone médiane cylindrique avec un deuxième diamètre (D2)
et la section de retenue (15) formant, au niveau de l'extrémité libre de la partie support, une pièce d'extrémité épaissie (16) avec une section transversale circulaire avec un diamètre (D3)
**caractérisé en ce que**
la section transversale de forme hexagonale de la tête (22) est formée de surfaces parallèles par paires, les surfaces parallèles présentant un écartement mutuel, qui se trouve dans la plage comprisse entre 1,8 mm et 2,8 mm,
la partie support (10) présente, au niveau de son extrémité à l'opposé de la section de flanc (14), la pièce d'extrémité (16), qui forme une section transversale circulaire et
dans lequel le rapport de diamètre entre le deuxième diamètre (D2) de la section de retenue (15) et le troisième diamètre (D3) (D2: D3) de la pièce d'extrémité (16) est choisi dans la plage comprise entre 0,75 et 0,95.

2. Crampon pour un pneumatique comprenant une partie support (10) et un insert (20) maintenu sur celle-ci, la partie support (10) présentant une section de flanc (14) à laquelle une section de retenue (15) est raccordée, dans laquelle un logement (19) est formé, l'insert (20) étant introduit dans le logement (19) et faisant saillie avec une tête (22) depuis le logement (19), la tête (22) de l'insert (20) présentant au moins par sections une section transversale de forme hexagonale,
**caractérisée en ce que**
les angles de la section de forme transversale hexagonale sont formés par des sections de transition arrondies
et **en ce que** la tête (22) de l'insert (20) se termine par une section de capuchon en forme de calotte à courbure convexe.

3. Crampon selon la revendication 1 ou 2,
**caractérisé en ce que**
la section transversale de forme hexagonale est formée de façon symétrique et toutes les surfaces dans le plan de la section transversale présentent la même étendue.

4. Crampon selon une des revendications 1 à 3,
**caractérisé en ce que**
une tige (23) est formée sur la tête (22) de l'insert (20) et **en ce que** la section transversale de forme hexagonale de la tête (22) s'étend de façon continue dans une zone de transfert (24) de la tige (23).

5. Crampon selon la revendication 1,
**caractérisé en ce que**
la tête (22) de l'insert (20) se termine par une section de capuchon (21) en forme de calotte à courbure convexe.

6. Crampon selon une des revendications 1 à 5,
**caractérisé en ce que**
l'insert (20) fait saillie depuis le logement (19) dans une plage comprise entre 1,0 mm et 1,4 mm et est fixé dans la direction de l'axe de l'insert (20) sur une longueur de retenue d'au moins 4,5 mm dans le logement (19).

7. Crampon selon une des revendications 1 à 6,
**caractérisé en ce que**
la section de flanc (14) forme un premier diamètre maximal (D1),
**en ce que** la section de retenue (15) présente une section qui présente un deuxième diamètre (D2) et
**en ce que** le rapport de diamètre entre le premier diamètre (D1) et le deuxième diamètre (D2) est choisi dans la plage comprise entre 1,2 et 1,7.

8. Crampon selon une des revendications 1 à 7,
**caractérisé en ce que**
la partie support (10) présente, au niveau de son extrémité à l'opposé de la section de flanc (14), une pièce d'extrémité (16), qui forme une section transversale circulaire, **en ce que** la section transversale circulaire de la pièce d'extrémité (16) présente un troisième diamètre (D3) et
**en ce que** le rapport de diamètre entre le premier diamètre (D1) de la section de flanc (14) et le troisième diamètre (D3) (D1: D3) est choisi dans la plage comprise entre 1,1 et 1,5.

9. Crampon selon une des revendications 1 à 8,
**caractérisé en ce que**
la partie support (10) présente une étendue longitudinale totale (h1) dans la direction de l'axe dans la plage comprise entre 8,0 mm et 12,0 mm et
**en ce que** l'insert (20) présente une longueur (h3) dans la direction de l'axe de la partie support (10), choisie dans la plage comprise entre 4 mm et 7,5 mm.

10. Crampon selon une des revendications 1 à 9,
**caractérisé en ce que**
la section de flanc (14) présente une hauteur (h1) dans la direction de l'axe de la partie support (10), choisie dans la plage comprise entre 1,0 mm et 2,2 mm.

11. Crampon selon une des revendications 7 à 10,
**caractérisé en ce que**
le rapport entre l'étendue longitudinale totale (h1) de la partie support (10) et le diamètre maximal (D1) (h1: D1) de la section de flanc (14) est choisi dans la plage comprise entre 1,1 et 1,3.

12. Crampon selon une des revendications 1 à 11,
**caractérisé en ce que**
la partie support (10) et l'insert (20) présentent ensemble une masse ≤ 1,1 g.

13. Pneumatique équipé d'un crampon, dans lequel le crampon est ancré dans un logement du pneumatique,
**caractérisé par** un crampon selon une des revendications 1 à 12.
